Europäisches Patentamt

European Patent Office

Office européen des brevets

(19)

(11) **EP 0 862 160 B1**

(12) **EUROPÄISCHE PATENTSCHRIFT**

(45) Veröffentlichungstag und Bekanntmachung des Hinweises auf die Patenterteilung:
**26.09.2001 Patentblatt 2001/39**

(51) Int Cl.$^7$: **G10L 15/06**

(21) Anmeldenummer: **98200509.2**

(22) Anmeldetag: **18.02.1998**

(54) **Verfahren zur Spracherkennung mit Sprachmodellanpassung**

Speech recognition method with model adaptation

Procédé de reconnaissance de la parole avec adaptation de modèle

(84) Benannte Vertragsstaaten:
**DE FR GB**

(30) Priorität: **28.02.1997 DE 19708184**

(43) Veröffentlichungstag der Anmeldung:
**02.09.1998 Patentblatt 1998/36**

(73) Patentinhaber:
• **Philips Corporate Intellectual Property GmbH**
**52064 Aachen (DE)**
Benannte Vertragsstaaten:
**DE**
• **Koninklijke Philips Electronics N.V.**
**5621 BA Eindhoven (NL)**
Benannte Vertragsstaaten:
**FR GB**

(72) Erfinder:
• **Besling, Stefan**
**Röntgenstrasse 24, 22335 Hamburg (DE)**
• **Meier, Hans-Günter**
**Röntgenstrasse 24, 22335 Hamburg (DE)**

(74) Vertreter: **Volmer, Georg, Dipl.-Ing. et al**
**Philips Corporate Intellectual Property GmbH,**
**Habsburgerallee 11**
**52064 Aachen (DE)**

(56) Entgegenhaltungen:
• **BESLING S ET AL: "Confidence-driven estimator perturbation: BMPC Best Model Perturbation within Confidence" 1997 IEEE INTERNATIONAL CONFERENCE ON ACOUSTICS, SPEECH, AND SIGNAL PROCESSING (CAT. NO.97CB36052), 1997 IEEE INTERNATIONAL CONFERENCE ON ACOUSTICS, SPEECH, AND SIGNAL PROCESSING, MUNICH, GERMANY, 21-24 APRIL 1997, Seiten 803-806 vol.2, XP002089830 ISBN 0-8186-7919-0, 1997, Los Alamitos, CA, USA, IEEE Comput. Soc. Press, USA**
• **KNESER R ET AL: "ON THE DYNAMIC ADAPTATION OF STOCHASTIC LANGUAGE MODELS" SPEECH PROCESSING, MINNEAPOLIS, APR. 27 - 30, 1993, Bd. 2, 27. April 1993, Seiten II-586-589, XP000427857 INSTITUTE OF ELECTRICAL AND ELECTRONICS ENGINEERS**
• **SRINVASA RAO P ET AL: "LANGUAGE MODEL ADAPTATION VIA MINIMUM DISCRIMINATION INFORMATION" PROCEEDINGS OF THE INTERNATIONAL CONFERENCE ON ACOUSTICS, SPEECH, AND SIGNAL PROCESSING (ICASSP), DETROIT, MAY 9 - 12, 1995 SPEECH, Bd. 1, 9. Mai 1995, Seiten 161-164, XP000657955 INSTITUTE OF ELECTRICAL AND ELECTRONICS ENGINEERS**
• **SHO-ICHI MATSUNAGA ET AL: "TASK ADAPTATION IN SYLLABLE TRIGRAM MODELS FOR CONTINUOUS SPEECH RECOGNITION" IEICE TRANSACTIONS ON INFORMATION AND SYSTEMS, Bd. E76 - D, Nr. 1, 1. Januar 1993, Seiten 38-43, XP000354884**

## Beschreibung

Die Erfindung betrifft die automatische Erkennung von Sprache, bei der ein Sprachmodell mit Sprachmodellwerten verwendet wird, die aus einem längeren Trainingstext ermittelt werden, wobei für bestimmte Fälle, insbesondere bestimmte Textarten, eine Anpassung des Sprachmodells anhand insbesondere kurzer Textteile vorgenommen wird.

Bei der automatischen Spracherkennung wird aus einem Sprachsignal eine Folge von Testwerten abgeleitet, die mit gespeicherten Referenzwerten verglichen werden, wobei Folgen von Referenzwerten Wörter eines vorgegebenen Vokabulars darstellen. Aus dem Vergleich werden Bewertungswerte abgeleitet, die an Wortgrenzen mit Sprachmodellwerten verknüpft werden. Diese Sprachmodellwerte geben die Wahrscheinlichkeiten gegebener Wortfolgen begrenzter Länge wieder und sind aus einer größeren Menge von Trainings-Sprachsignalen ermittelt worden. Dadurch können mit diesen Sprachmodellwerten langfristige Änderungen im Sprachgebrauch, wie z.B. Thema oder Sprachstil, nicht berücksichtigt werden. Da gut angepaßte Sprachmodellwerte die Zuverlässigkeit der Spracherkennung erheblich beeinflussen, ist es erwünscht, anhand einer kleinen aktuellen Textmenge die Sprachmodellwerte möglichst gut an diesen Text anzupassen. Diese Anpassung kann während der Erkennung eines speziellen Textes erfolgen oder auch im Anschluß an die Erkennung eines Teils eines Textes, nachdem Erkennungsfehler manuell berichtigt wurden.

Eine aus IEEE Trans. on Pattern Analysis and Machine Intelligence, Vol. 12, June 1990, Seiten 570 bis 583 bekannte Methode, ein adaptives Sprachmodell zu erstellen, ist der sogenannte Sprachmodell-Cache. Hierbei werden relative Häufigkeiten $N_a(w)/N_a$ berechnet, wobei $N_a(w)$ die Häufigkeit des Wortes w im Adaptionsmaterial bezeichnet und $N_a$ für die Gesamtzahl der Wörter im Adaptionsmaterial steht. Das adaptive Cache-Sprachmodell $P_a(w \mid h)$ berechnet sich nun aus dem Basis-Sprachmodell $P_s(w \mid h)$ als

$$P_a(w|h): = \lambda \ P_s(w|h) + (1-\lambda) \ \frac{N_a(w)}{N_a}$$

wobei der Interpolationsparameter $\lambda$ entweder fest vorgegeben oder bei jeder Adaption so bestimmt wird, daß das Adaptionsmaterial bestmöglich beschrieben wird, wie aus Proc. ICASS, Minneapolis, U.S.A.,Vol.II,April 1993,Seiten 585 bis 593 bekannt ist: Die dadurch erreichte Anpassung der Sprachmodellwerte an einen aktuellen Text ist jedoch nicht optimal.

Aufgabe der Erfindung ist es, ein Verfahren zur Anpassung von Sprachmodellwerten anzugeben, das auch anhand eines kurzen Sprachsignals eine gute Anpassung der Sprachmodellwerte an Besonderheiten dieses Sprachsignals, wie Thema oder Sprachstil, ermöglicht.

Diese Aufgabe wird erfindungsgemäß dadurch gelöst, daß aus einem relativ kurzen Text, an den das Sprachsignal angepaßt werden soll, Konfidenzintervalle für Wörter des Vokabulars in Abhängigkeit von verschiedenen vorhergehenden Wörtern gebildet werden. Dies kann mit bekannten Methoden der Statistik und Wahrscheinlichkeitsrechnung durchgerührt werden, die beispielsweise aus dem Buch von H. Weber "Einführung in die Wahrscheinlichkeitsrechnung und Statistik für Ingenieure", B.G. Teubner Stuttgart 1992, bekannt sind, insbesondere aus Seite 279. Im nächsten Schritt werden die Sprachmodellwerte des anhand von umfangreichen Trainings-Sprachsignalen ermittelten Sprachmodells mit einem Skalierungsfaktor multipliziert, der für jede unterschiedliche Vorgängerwortfolge so gewählt wird, daß für diese Vorgängerwortfolge die Sprachmodellwerte, d.h. die Wahrscheinlichkeiten für das Auftreten des betreffenden Wortes nach dieser Vorgängerwortfolge, möglichst gut in die Konfidenzintervalle passen. Für jeden skalierten Sprachmodellwert, der dadurch außerhalb des zugehörigen Konfidenzintervalls liegt, wird die nächstliegende Grenze des Konfidenzintervalls verwendet. Für nicht aufgetretene Kombinationen von Wörtern mit bestimmten Vorgängerwortfolgen kann ein Konfidenzintervall berechnet werden, sofern die Vorängerwortfolge aufgetreten ist. Wenn jedoch auch die Vorgängerwortfolge in Kombination mit irgendeinem Wort des Vokabulars nicht aufgetreten ist, können keine Konfidenzintervalle bestimmt werden, und es werden die ursprünglichen Sprachmodellwerte ohne Anpassung verwendet. Da für viele praktische Anwendungen Vorgängerwortfolgen verwendet werden, die nur ein Wort oder zwei Wörter lang sind, ist es möglich, die Sprachmodellwerte schon anhand einer kleinen Menge von gesprochenen Textdaten an diese Daten anzupassen.

Der Skalierungsfaktor muß so gewählt werden, daß die Wahrscheinlichkeitswerte, d.h. die Sprachmodellwerte aller Wörter zu einer bestimmten Vorgängerwortfolge sich zum Wert 1 aufsummieren. Da in diese Bedingung aber die Sprachmodellwerte, die nicht gemäß dem Skalierungsfaktor angepaßt werden, sondern auf die nächstliegende Grenze des zugehörigen Konfidenzintervalls gesetzt werden, mit eingehen, wird der Skalierungsfaktor nach für solche Fälle bekannten Rechenverfahren bestimmt.

Die Ermittlung der angepaßten Sprachmodellwerte $P_a(w \mid h)$ für einen speziellen Text aus den Basis-Sprachmodellwerten $P(w \mid h)$, die anhand eines umfangreichen Trainingsmaterials ermittelt wurden, erfolgt auf folgende Weise

$$P_a(w|h) = \begin{cases} \alpha_h(w) & w \in A_h \\ \beta_h(w) & w \in B_h \\ \gamma_h P(w|h) & else \end{cases}$$

wobei $A_h$ der Wahrscheinlichkeitsbereich unter der unteren Grenze $\alpha_h$, $B_h$ der Wahrscheinlichkeitsbereich über der oberen Grenze $\beta_h$ und $\gamma_h$ der aus dem aktuellen Text über bekannte Optimierungsverfahren ermittelte Skalierungsfaktor ist.

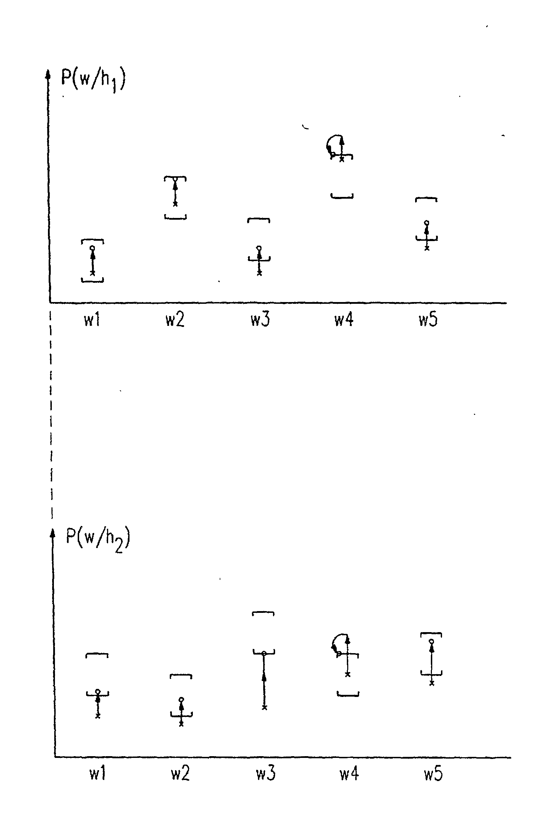

Das Prinzip dieser Anpassung soll anhand der Figur schematisch etwas näher erläutert werden. Diese deutet die Wahrscheinlichkeiten für eine Anzahl Wörter w1...w5 an, daß diese nach der Vorgängerwortfolge $h_1$ bzw. $h_2$ auftreten. Die Kreuze geben die aus dem Trainingstext ermittelten ursprünglichen Wahrscheinlichkeitswerte bzw. Sprachmodellwerte an, daß das Wort w1....w5 der Vorgängerwortfolge $h_1$ bzw. $h_2$ folgt, und die durch waagerechte Striche begrenze Abschnitte geben die entsprechenden Konfidenzintervalle an, die aus dem aktuellen Text ermittelt sind. Die Pfeile geben an, um wieviel die ursprünglichen Sprachmodellwerte durch den Skalierungsfaktor $\gamma_h$ verschoben werden, wobei die kleinen Kreise die angepaßten Sprachmodellwerte andeuten. Im oberen Bild für die Vorgängerwortfolge $h_1$ ist zu erkennen, daß beim Wort w1 der ursprüngliche Sprachmodellwert bereits innerhalb des Konfidenzintervalls lag und trotz der Skalierung darin verbleibt. Dies gilt auch für das Wort w2. Bei den Wörtern w3 und w5 lag der ursprüngliche Sprachmodellwert außerhalb des Konfidenzintervalls und wird durch die Skalierung in das Intervall geschoben. Beim Wort w4 liegt der ursprüngliche Sprachmodellwert zwar innerhalb des Konfidenzintervalls, wird durch die Skalierung jedoch nach außerhalb gebracht, so daß nun die obere Grenze des Konfidenzintervalls für das Wort w4 verwendet wird, wie durch den kleinen Kreis angedeutet ist.

Im unteren Bild für die Vorgängerwortfolge $h_2$ wird angenommen, daß die ursprünglichen Sprachmodellwerte für die Wörter w1, w2 und w5 durch die Skalierung in das Konfidenzintervall gebracht werden, während beim Wort w4 der skalierte Sprachmodellwert wieder außerhalb des Konfidenzintervalls liegt und damit auf die obere Grenze des Intervalls gesetzt wird. Beim Wort w3 liegt der ursprüngliche Sprachmodellwert jedoch weit unterhalb des Konfidenzintevalls und wird durch Skalierung auch nicht in das Intervall gebracht, so daß in diesem Fall die untere Grenze des zugehörenden Konfidenzintervalls als angepaßter Sprachmodellwert verwendet wird.

Mit den derart angepaßten Sprachmodellwerten läßt sich eine signifikante Verbesserung der Erkennungsergebnisse erreichen, insbesondere wenn der zu erkennende Text in seinem Charakter, insbesondere in seinem Stil oder in seinem Thema, von dem ursprünglichen Trainingsmaterial wesentlich abweicht.

**Patentansprüche**

1.  Verfahren zum Anpassen eines Sprachmodells mit Sprachmodellwerten für eine automatische Spracherkennung, bei der aus einem Sprachsignal Testwerte abgeleitet und mit ein vorgegebenes Vokabular bestimmenden Referenzwerten verglichen und Bewertungswerte abgeleitet werden, die an Wortgrenzen mit Sprachmodellwerten verknüpft werden, wobei die Sprachmodellwerte von der Wahrscheinlichkeit abhängen, daß ein bestimmtes Wort des Vokabulars in Abhängigkeit von wenigstens einem vorhergehenden Wort auftritt, und wobei anhand von Trainings-Sprachsignalen ein Basis-Sprachmodell mit Basissprachmodellwerten bestimmt wird, **gekennzeichnet durch** folgenden Schritten

    -   anhand eines zu den Trainings-Sprachsignalen unterschiedlichen Sprachsignals werden unter Verwendung statistischer Rechenverfahren Konfidenzintervalle mit einer oberen und einer unteren Grenze für Sprachmodellwerte ermittelt,
    -   es wird ein Skalierungsfaktor derart bestimmt, daß damit skalierte Basis-Sprachmodellwerte ein Optimierungskriterium bezüglich der Lage der skalierten Sprachmodellwerte zu den zugehörigen Konfidenzintervallen erfüllen,
    -   es werden skalierte Sprachmodellwerte, die in den Konfidenzintervallen liegen, und bei skalierten Sprachmodellwerten außerhalb der Grenzen der Konfidenzintervalle die nächstliegende Grenze als angepaßte Sprachmodellwerte und für nicht aus dem unterschiedlichen Sprachsignal ermittelte Konfidenzintervalle die Basis-Sprechmodellwerte für die weitere Erkennung des unterschiedlichen Sprachsignals verwendet.

2.  Verfahren nach Anspruch 1, wobei die Konfidenzintervalle für die Wahrscheinlichkeit eines Wortes nach einer vorgegebenen Folge von Vorgängerwörtern aus der Anzahl des Auftretens dieses Wortes und der vorgegebenen Folge sowie der Anzahl des Auftretens der vorgegebenen Folge im unterschiedlichen Sprachsignal bestimmt werden.

**Claims**

1. A method of adapting a language model with language model values for automatic speech recognition, in which test values are derived from a speech signal and compared with reference values determining a given vocabulary, there being derived scores which are linked to language model values at word boundaries, the language model values being dependent on the probability of occurrence of a given word of the vocabulary in dependence on at least one predecessor word, and in which a basic language model with basic language model values is determined on the basis of training speech signals, **characterized in that** the following steps are carried out:

   • determination, utilizing statistic calculation methods, of confidence intervals, having an upper and a lower boundary for language model values, on the basis of a speech signal which deviates from the training speech signals,
   • determination of a scaling factor in such a manner that basic language model values scaled thereby satisfy an optimization criterion in respect of the position of the scaled language model values relative to the associated confidence intervals,
   • use of scaled language model values which are situated in the confidence intervals and, in the case of scaled language model values situated beyond the boundaries of the confidence intervals, the nearest boundary as adapted language model values and, for confidence intervals not determined from the different speech signal, the basic language model values for the further recognition of the deviating speech signal.

2. A method as claimed in Claim 1, in which the confidence intervals for the probability of occurrence of a word after a predetermined sequence of predecessor words are determined from the number of occurrences of this word and the predetermined sequence as well as from the number of occurrences of the predetermined sequence in the deviating speech signal.

**Revendications**

1. Procédé d'adaptation d'un modèle de parole avec des valeurs de modèle de parole pour une reconnaissance automatique de la parole, des valeurs de test étant dérivées d'un signal de parole et comparées avec des valeurs de référence déterminant un vocabulaire préalablement déterminé et des valeurs d'évaluation qui sont associées aux limites du mot avec des valeurs du modèle de parole étant dérivées, les valeurs de modèle de parole dépendant de la probabilité qu'un mot déterminé du vocabulaire se produise en fonction d'au moins un mot précédent et, un modèle de parole de base étant déterminé avec des valeurs de modèle de parole de base à l'aide de signaux de parole d'entraînement, **caractérisé par** les étapes suivantes :

   - à l'aide d'un signal de parole différent de signaux de parole d'entraînement, des intervalles de confiance avec une limite supérieure et une limite inférieure pour les valeurs de modèle de parole sont déterminés en utilisant des procédés de calcul statistiques,
   - un facteur de cadrage est déterminé de telle sorte que les valeurs cadrées du modèle de parole de base remplissent un critère d'optimisation quant à la position des valeurs cadrées du modèle de parole par rapport aux intervalles de confiance correspondants,
   - des valeurs cadrées du modèle de parole qui se situent dans les intervalles de confiance et, pour les valeurs de modèle de parole cadrées, en dehors des limites des intervalles de confiance, la limite la plus proche étant utilisée comme valeurs adaptées de modèle de parole et, pour les intervalles de confiance non déterminés à partir du signal de parole différent, les valeurs du modèle de parole de base pour la reconnaissance ultérieure du signal de parole différent.

2. Procédé selon la revendication 1, les intervalles de confiance pour la probabilité d'un mot après une séquence préalablement déterminée de mots précédents étant déterminés à partir du nombre d'occurrences de ce mot et de la séquence préalablement déterminée ainsi que le nombre d'occurrences de la séquence préalablement déterminée dans le signal de parole différent.